# EUROPÄISCHE PATENTSCHRIFT

(11) **EP 2 615 340 B1**
(45) Veröffentlichungstag und Bekanntmachung des Hinweises auf die Patenterteilung: **24.10.2018**
(21) Anmeldenummer: 12008514.7
(22) Anmeldetag: 21.12.2012
(51) Int. Cl.: F16K 17/04, F16K 17/06

(54) **Druckventil**
Pressure valve
Soupape de pression

(30) Priorität: 11.01.2012 DE 102012000368
(43) Veröffentlichungstag der Anmeldung: 17.07.2013
(73) Patentinhaber: ROBERT BOSCH GMBH, 70442 Stuttgart (DE)
(72) Erfinder: Denadija, Dragoljub, 97828 Marktheidenfeld (DE); Spahn, Wolfgang, 97737 Gemünden (DE); Cords, Karl, 97816 Lohr am Main (DE)
(74) Vertreter: Wiesmann, Stephan

(56) Entgegenhaltungen:
- EP-A1- 1 103 878
- WO-A1-2011/045318
- DE-A1- 3 912 779
- JP-U- S5 844 573
- JP-U- S57 119 171
- US-A- 1 961 758

## Beschreibung

Die Erfindung betrifft ein Druckventil, insbesondere ein direktgesteuertes Druckbegrenzungsventil. In dem Datenblatt RD 25010-B/10.06 der Anmelderin Ist ein derartiges Druckventil offenbart. Dieses hat eine in einen Steuerblock einschraubbare Hülse als Ventilgehäuse, in dem eine Ventilfeder angeordnet ist. Diese stützt sich an einem Ventilteller ab und beaufschlagt einen Ventilkörper des Druckventils mit einer Federkraft in Richtung seines Ventilsitzes. Durch den Ventilkörper ist eine Verbindung zwischen einem Druck- und einem Tankanschluss steuerbar. Der Ventilkörper ist dabei mit einer gegen die Federkraft wirkenden Druckkraft eines Druckmittels des Druckanschlusses beaufschlagbar. Übersteigt die auf den Ventilkörper wirkende Druckkraft die Federkraft, so hebt der Ventilkörper von seinen Ventilsitz ab und öffnet eine Druckmittelverbindung zum Federraum der Ventilfeder, der mit dem Tankanschluss verbunden ist.
Der Federteller ist in Axialrichtung zur Veränderung der Federkraft der Ventilfeder über einen Verstellmechanismus verstellbar, der in einem Verschlusselement der Hülse angeordnet ist, wobei das Verschlusselement in die Hülse eingeschraubt ist. Der Verstellmechanismus hat einen Schaft mit einem in ein Innengewinde der Hülse einschraubbaren Gewindeabschnitt und mit einem Halteabschnitt für den Federteller. Der Halteabschnitt hat einen radial zurückgestuften Endabschnitt, der von dem Federteller umgriffen ist. Der Federteller hat hierfür eine Durchgangsbohrung über die er auf den Halteabschnitt gesteckt ist. Über seine von der Ventilfeder wegweisende Stirnfläche stützt sich der Federteller an einer Ringstirnfläche des Halteabschnitts ab, die durch den zurückgestuften Endabschnitt gebildet ist. Über einen Sprengring ist der Federteller dann in Axialrichtung am Schaft festgelegt. Die Stirnfläche des Federtellers dient des Weiteren als Anlageschulter, über die der Federteller sich am Verschlusselement abstützen kann. Der Schaft ist von außen mit einem Werkzeug relativ zur Hülse verschraubbar. Wird das Druckventil als Sicherheitsventil eingesetzt, so können der Schaft und das Ventilgehäuse derart ausgestaltet sein, dass sie mit einer Plombe versehen werden können.
Nachteilig bei dieser Lösung ist, dass beim Verstellen bzw. Verschrauben des Schafts des Verstellmechanismus, um die Federkraft der Ventilfeder zu verändern, ein derart hohes Drehmoment auf das Verschlusselement oder die Hülse übertragbar ist, dass diese aus ihrer verschraubten und festgelegten Position ungewollt gelöst werden. Dies ist insbesondere dann der Fall, wenn der Federteller mit seiner Stirnfläche an dem Verschlusselement anliegt, womit dann ein Drehmoment über den Schaft und über den an diesem festgelegten Federteller auf das Verschlusselement übertragbar ist. Dieser Effekt wird verstärkt, wenn im Federraum ein Druck vorherrscht. Wird das Verschlusselement und/ oder die Hülse ungewollt gelöst, so kann dies äußerst nachteilig beispielsweise zu einem Austreten von Druckmittel aus dem Druckventil führen. Bei einem vollständigen Herausschrauben des Verschlusselements könnte dies aufgrund der sich entspannenden Ventilfeder und/oder der Druckkraft stark in Richtung weg vom Ventilgehäuse beschleunigt werden und im schlimmsten Fall zu einem Personenschaden führen.
Des Weiteren sind Druckventile aus der EP 1 103 878 A1, der DE 39 12 779 A1, der US 1 961 758 A, der JP S58 44573 U, JP S57 119171 U und der WO2011/045318 A1 bekannt.
Dem gegenüber liegt der Erfindung die Aufgabe zugrunde, ein Druckventil zu schaffen, das eine hohe Sicherheit aufweist.
Diese Aufgabe wird gelöst durch ein Druckventil gemäß den Merkmalen des Patentanspruchs 1.
Sonstige vorteilhafte Weiterbildungen der Erfindung sind Gegenstand weiterer Unteransprüche.
Erfindungsgemäß hat ein Druckventil, insbesondere ein als Sitzventil ausgebildetes Druckbegrenzungsventil, ein Ventilgehäuse. In diesem Ist ein Fedefteller angeordnet, an dem sich eine Ventilfeder abstützt und einen Ventilkörper des Druckventils mit einer Federkraft, insbesondere in Richtung seines Ventilsitzes, beaufschlagt. Zum Verändern der Federkraft kann der Federteller über eine Einstellspindel in Richtung einer Erhöhung oder Senkung der Federkraft verschoben werden. Die Einstellspindel hat zwei Teile, nämlich einen verschiebbar und gleitend im Ventilgehäuse angeordneten Spindelschaft und eine in einem Verschlusselement des Ventilgehäuses einschraubbare Verstellschraube. Der Spindelschaft ist dabei mit dem Federteller verbunden. Die vorzugsweise koaxial zum Spindelschaft angeordnete Verstellschraube und der Spindelschaft sind dabei derart ausgestaltet, dass die Verstellschraube in ihrer Umfangsrichtung relativ zum Spindelschaft gedreht bzw. bewegt werden kann und den Spindelschaft in einer Axialrichtung verschieben kann.
Diese Lösung hat den Vorteil, dass ein Drehmoment von der Verstellschraube, beispielsweise beim Ein- oder Ausschrauben der Verstellschraube aus dem Ventilgehäuse, nicht auf den Spindelschaft übertragbar ist. Im Unterschied zum Stand der Technik wird somit ein Herausschrauben von mit der Einstellspindel verbundenen Teilen des Druckventils wirksam verhindert, wodurch das Druckventil äußerst sicher ist. Somil wird die Sicherheit insbesondere beim Einstellen der Federkraft erhöht. Außerdem ist ein derartiges Druckventil vorrichtungstechnisch äußerst einfach aufgebaut.
In weiterer Ausgestaltung der Erfindung ist der Spindelschaft dichtend im Ventilgehäuse geführt, wodurch dieser einen Innenraum des Ventilgehäuses selbst bei aus dem Ventilgehäuse herausgeschraubter Verstellschraube wirksam nach außen abdichten kann.

Der Federteller hat eine an dem Verschlusselement des Ventilgehäuses anliegbare Schulter, um seinen Verschiebeweg in einer Richtung weg vom Ventilkörper beziehungsweise in Richtung einer Verkleinerung der Federkraft zu begrenzen, womit der mit diesem verbundene Spindelschaft ebenfalls in seinem Verschiebeweg begrenzt ist.

Der Spindelschaft und der Federteller sind vorrichtungstechnisch einfach einstückig ausgebildet.

Um den Spindelschaft zusätzlich zum Verschlusselement des Ventilgehäuses zu führen, kann die Verstellschraube den Spindelschaft zumindest abschnittsweise umgreifen.
Der Spindelschaft hat bevorzugterweise einen ersten im Ventilgehäuse oder in dem Verschlusselement des Ventilgehäuses geführten Führungsabschnitt und einen zweiten radial zum Führungsabschnitt zurückgestuften Endabschnitt, der dann von der Verstellschraube umgriffen ist. Zum Umgreifen des Endabschnitts des Spindelschafts hat die Verstellschraube eine axiale Aussparung oder Bohrung, insbesondere Sacklochbohrung, in die der Endabschnitt des Spindelschafts dann einführbar ist.
Mit Vorteil sind die Verstellschraube und der Spindelschaft derart ausgestaltet, dass sie sich in Axialrichtung hintergreifen, wodurch sie eine Einheit bilden und die Verstellschraube in einem aus dem Ventilgehäuse ausgeschraubten Zustand nicht verlorengehen kann.
Zur Hintergreifung von Verstellschraube und Spindelschaft kann ein auskragender Vorsprung, insbesondere ein Innenbund, in der Bohrung der Verstellschraube und ein auskragender Vorsprung, insbesondere ein Außenbund, am Endabschnitt des Spindelschafts ausgebildet sein.
Damit der Endabschnitt des Spindelschafts einfach in die Aussparung der Verstellschraube einführbar ist, ist ein Führungszapfen am Endabschnitt des Spindelschafts ausgebildet Die Verstellschraube kann den Spindelschaft einfach über ihre Stirnfläche axial verschieben.
Die Einstellspindel ist an einem Verschlusselement des Ventilgehäuses angeordnet.
Bevorzugterweise ist der Spindelschaft in einem Verschlusselement des Ventilgehäuses geführt und die Verstellschraube ist in das Versehtusselement von außen her einschraubbar, wobei das Verschlusselement insbesondere in das Ventilgehäuse eingeschraubt ist. Ist das Druckventil als Einschraubventil ausgebildet, so kann das Ventilgehäuse dann beispielsweise in eine Ventilbohrung eines Steuerblocks eingeschraubt werden.

Im Folgenden werden bevorzugte Ausführungsformen der Erfindung anhand schematischer Zeichnungen näher erläutert. Es zeigen:
Figur 1 in einer Längsschnittansicht ein Druckventil aus dem Stand der Technik;
Figur 2 bis 5 in einer Längsschnittansicht eine erfindungsgemäße Einstellspindel eines Druckventils gemäß einem ersten Ausführungsbeispiel und
Figur 6 in einer Längsschnittansicht die erfindungsgemäße Einstellspindel eines Druckventils gemäß einem zweiten Ausführungsbeispiel.

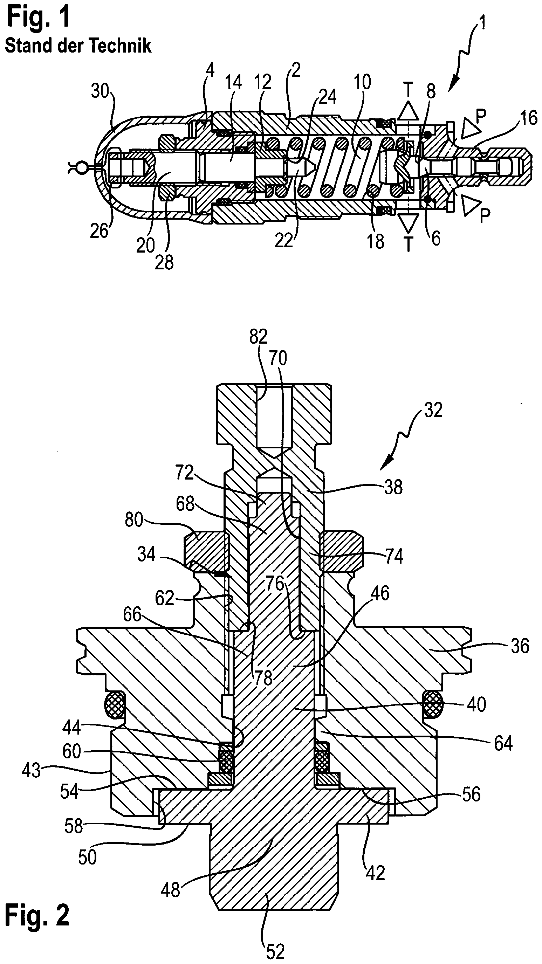

Gemäß Figur 1 ist ein Druckventil 1 aus dem Stand der Technik gezeigt, um die wesentlichen Komponenten eines derartigen Druckventils 1 zu erläutern. Bei dem Druckventil 1 handelt es sich um ein direktgesteuertes Druckbegrenzungsventil, das beispielsweise in dem eingangs genannten Datenblatt RD 25010B/10.06 der Anmelderin offenbart ist. Das Druckventil 1 hat ein in einen Steuerblock einschraubbares Ventilgehäuse 2 bzw. Hülse, das von einem Verschlusselement 4 verschlossen ist. Innerhalb des Ventilgehäuses 2 ist ein Ventilkörper 6 angeordnet, dem ein Ventilsitz 8 zugeordnet ist, an dem er in der Figur 1 anliegt. Der Ventilkörper 6 wird von einer im Ventilgehäuse 2 angeordneten Ventilfeder 10 mit einer Federkraft in Richtung seines Ventilsitzes 8 beaufschlagt. Die als Druckfeder ausgebildete Ventilfeder 10 stützt sich an einem im Ventilgehäuse 2 angeordneten Federteller 12 ab, der über eine Einstellspindel 14 in Längsrichtung des Druckventils 1 verschiebbar ist, womit die Federkraft der Ventilfeder 10 eingestellt werden kann. Der Ventilsitz 8 ist an einem weiteren Verschlusselement 16 des Ventilgehäuses 2 ausgebildet und steuert eine Druckmittelverbindung zwischen einem am Verschlusselement 16 vorgesehenen Druckanschluss P und einem am Ventilgehäuse 2 vorgesehenen Tankanschluss T. Dieser ist mit einem Federraum 18 des Ventilgehäuses 2 verbunden, in dem die Ventilfeder 10 angeordnet ist. Über den Druckanschluss P ist der Ventilkörper 6 mit einer Druckkraft entgegen der Federkraft der Ventilfeder 10 in Richtung seiner Offnungsstellung beaufschlagbar. Übersteigt diese Druckkraft die in Schließrichtung auf den Ventilkörper 6 wirkenden Kräfte, insbesondere die Federkraft, dann hebt der Ventilkörper 6 von seinem Ventilsitz 8 ab und öffnet die Druckmittelverbindung zwischen dem Druckanschluss P und dem Tankanschluss T.

Die Einstellspindel 14 hat einen Schaft 20, der über ein Außengewinde in das Verschlusselement 4 eingeschraubt ist. Das Verschlusselement 4 hat hierfür eine Durchgangsbohrung mit einem Innengewinde. Der Schaft 20 hat einen Gewindeabschnitt mit einem Außengewinde und einen sich daran anschließenden Dichtabschnitt, an dem sich ein im Verschlusselement 4 angeordnetes Dichtelement abstützt, um den Federraum 18 nach außen abzudichten, Mit einem Endabschnitt 22 kragt das Verschlusselement in den Federraum 18 ein. Dieser ist gegenüber dem Dichtabschnitt radial zurückgestuft, wodurch eine Ringstirnfläche gebildet ist, an der sich der Federteller 12 an dem Schaft 20 abstützt. Der Federteller 12 hat eine Durchgangsbohrung und ist über diese auf den Endabschnitt 22 des Schafts 20 gesteckt und mit einem Sprengring 24 an diesem festgelegt. Der Federteller 12 ist somit zwischen der Ringstirnfläche und dem Sprengring 24 am Schaft 20 gehaltert. Der Schaft 20 hat des Weiteren einen aus dem Verschlusselement 20 auskragenden Werkzeugabschnitt 26, mit einer stirnseitig von außen her axial in diesen eingebrachte Innensechskant-Aussparung. Über eine Kontermutter 28 ist der Schaft 20 zusätzlich am Verschlusselement 4 festgelegt.

Das Druckventil 1 ist als Sicherheitsventil einsetzbar und hat aus diesem Grund ein kuppelförmiges Abdeckelement 30, das den Zugang zum Werkzeugabschnitt 26 des Schafts 20 versperrt und am Verschlusselement 4 gehaltert ist. Zum Einstellen der Federkraft der Ventilfeder 10 wird die Position des Federtellers 12 über den Schaft 20 verändert, wobei hierbei das Abdeckelement 30 entfernt ist. Ein Herausschrauben des Schafts 20 kann zur eingangs erläuterten Drehmomentbeaufschlagung des Verschlusselements 4 und/oder des Ventilgehäuses 2 führen.

Figur 2 zeigt die für die Erfindung wesentlichen Bauteile eines erfindungsgemäßen Druckventils 32. Dieses hat eine zweigeteilte Einstellspindel 34 mit einer in ein Verschlusselement 36 eingeschraubten Verstellschraube 38 und einen dichtend in dem Verschlusselement 36 geführten Spindelschaft 40. An diesem ist ein Federteller 42 ausgebildet. Das Verschlusselement 36 ist in eine Hülse - siehe beispielsweise Ventilgehäuse 2 aus Figur 1 - über ein Gewinde 43 einsetzbar und mit einem Abdeckelement verschließbar.

Der Spindelschaft 40 hat einen gleitend und dichtend in einer Durchgangsbohrung 44 des Verschlusselementes 36 geführten Führungsabschnitt 46. Mit einem Endabschnitt 48 kragt der Spindelschaft 40 aus dem Verschlusselement 36 in Richtung des nicht dargestellten Federraums des Druckventils 32 aus. Der einstückig am Endabschnitt 48 ausgebildete Federteller 42 ist durch einen Außenbund am Spindelschaft 40 ausgebildet. An einer vom Verschlusselement 36 wegweisenden Ringstirnfläche 50 des Federtellers 42 stützt sich eine in der Figur 2 nicht dargestellte Ventilfeder des Druckventils 32 ab. Im Anschluss an den Federteller 42 ist der Endabschnitt 48 des Spindelschafts 40 im Vergleich zum Führungsabschnitt 46 radial zu einem Führungszapfen 52 für die Ventilfeder erweitert. Mit seiner zum Verschlusselement 36 weisenden Ringstirnfläche 54 beziehungsweise Schulter 54 liegt der Federteller 42 in der Figur 2 an einer Anlagefläche 56 des Verschlusselements 36 an. Die Anlagefläche 56 ist im Verschlusselement 36 als eine ringförmige Bodenfläche einer einen etwa kreiszylindrischen Querschnitt aufweisenden Aussparung 58 des Verschlusselements 36 ausgebildet. Diese hat einen größeren Durchmesser und eine geringere Tiefe als der Federteller 42, weswegen dieser in dem in der Figur 2 gezeigten Zustand nur abschnittsweise in die Aussparung 58 eingetaucht ist. Im Anschluss an die Aussparung 58 hat die Durchgangsbohrung 44 des Verschlusselements 36 zwei Stufen, die zur Aufnahme von Dichtmitteln 60 dienen. Ein Innengewinde 62 ist in die Durchgangsbohrung 44 des Verschlusselements 36 von einer von der Anlagefläche 56 wegweisenden Außenseite her eingebracht und erstreckt sich, in Längsrichtung gesehen, etwa bis zur Hälfte der Durchgangsbohrung 44. Zwischen dem Innengewinde 62 und den Stufen für die Dichtmittel 60 ist in der Durchgangsbohrung 44 ein Führungsabschnitt 64 vorgesehen, in dem der Spindelschaft 40 mit seinem mittig ausgebildeten Führungsabschnitt 66 geführt ist, wobei seine Außenmantelfläche dann an einer Innenmantelfläche des Führunggabschnitts 64 gleiten kann. Der Führungsabschnitt 64 der Durchgangsbohrung 44 hat den kleinsten Durchmesser in der Durchgangsbohrung 44. Der vom Endabschnitt 48 wegweisende weitere Endabschnitt 68 des Spindelschafts 40 ist radial zurückgestuft und in eine Sacklochbohrung 70 der Verstellschraube 38 eingetaucht, Stirnseitig hat der Endabschnitt 68 des Spindelschafts 40 einen Führungszapfen 72, der bei der Montage des Spindelschafts 40 mit der Verstellschraube 38 zum einfachen Einführen des Endabschnitts 68 des Spindelschafts 40 in die Sacklochbohrung 70 dient.

Die Verstellschraube 38 hat einen Außengewindeabschnitt 74, der in der Figur 2 abschnittsweise in das Innengewinde 62 des Verschlusselements 36 eingeschraubt ist. Durch die Sacklochbohrung 70 ist bei der Verstellschraube 38 eine zum Spindelschaft 40 weisende Ringstirnfläche 76 ausgebildet, die zum axialen Verschieben des Spindelschafts 40 an einer durch den zurückgestuften Endabschnitt 68 des Spindelschafts 40 gebildeten Ringfläche 78 anliegbar ist. Die Sacklochbohrung 70 hat an ihrem bodenseitigen Endabschnitt einen verkleinerten Durchmesser, der etwas größer als der Durchmesser des Führungszapfens 72 ist, damit dieser darin eintauchen kann. In der Figur 2 ist der Endabschnitt 68 des Spindelschafts 40 vollständig in die Verstellschraube 38 eingelaucht und hierbei stirnseitig von einer Bodenfläche der Sacklochbohrung 70 beabstandet, wodurch der Spindelschaft 40 axial nur über die Ringfläche 78 an der Verstellschraube 38 anliegt. Auf den Außengewindeabschnitt 74 der Verstellschraube 38 ist des Weiteren eine Kontermutter 80 verschraubt. Über einen Innensechskant-Aussparung 82, die von einer von dem Verschlusselement 36 wegweisenden Stirnseite der Verstellschraube 38 in diese eingebracht ist, kann an die Verstellschraube 38 ein Werkzeug, insbesondere ein Inbusschlüssel, angreifen, um diese ein- oder auszuschrauben.

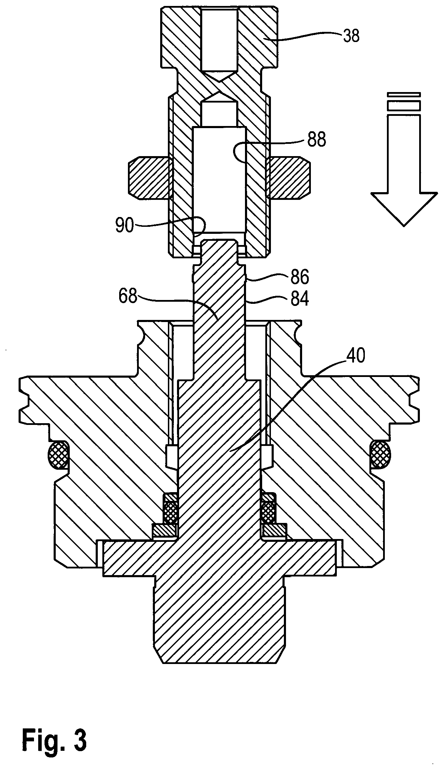

Figur 3 zeigt die Verstellschraube 38 und den Spindelschaft 40 in einem getrennten Zustand. Hierbei ist erkennbar, dass an einer Außenmantelfläche 84 des Endabschnitts 68 ein Außenbund 86 ausgebildet ist. Dieser hintergreift im Zusammengesetzten Zustand von Spindelschaft 40 und Verstellschraube 38 einen an einer Innenmantelfläche 88 der Sacklochbohrung 70 der Verstellschraube 38 ausgebildeten Innenbund 90. Zur Montage von der Verstellschraube 38 und dem Spindelschaft 40 wird die Verstellschraube 38 mit ihrem Innenbund 90 über den Außenbund 86 des Spindelschafts 40 gepresst. Durch die sich hintergreifenden Bünde 86 und 90 sind der Spindelschaft 40 und die Verstellschraube 38 formschlüssig in Axialrichtung verbunden. In Radialrichtung weisen Spindelschaft 40 und Verstellschraube 38 ein leichtes Spiel auf, wodurch sie leichtgängig relativ in Axialrichtung und Umfangsrichtung zueinander bewegbar sind.

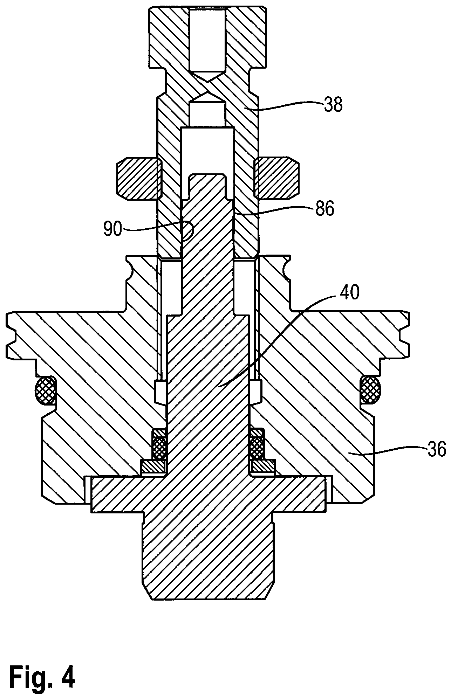

In Figur 4 sind die Verstellschraube 38 und der Spindelschaft 40 im montierten Zustand dargestellt, wobei die Verstellschraube 38 nicht in das Verschlusselement 36 eingeschraubt ist. Hierbei ist erkennbar, dass sich der Innenbund 90 und der Außenbund 88 hintergreifen und in Axialrichtung voneinander beabstandet sind. Die Bünde 88 und 90 sind somit derart ausgebildet, dass die Verstellschraube 38 vollständig aus dem Verschlusselement 36 herausschraubbar ist, ohne das die Bünde 88. 90 aneinander anliegen. Im vollständig herausgeschraubten Zustand der Verstellschraube 38 ist diese dann vorteilhafterweise über die Bünde 88, 90 in Axialrichtung formschlüssig mit dem Spindelschaft 40 verbunden, wodurch die Verstellschraube 38 nicht verloren gehen kann.

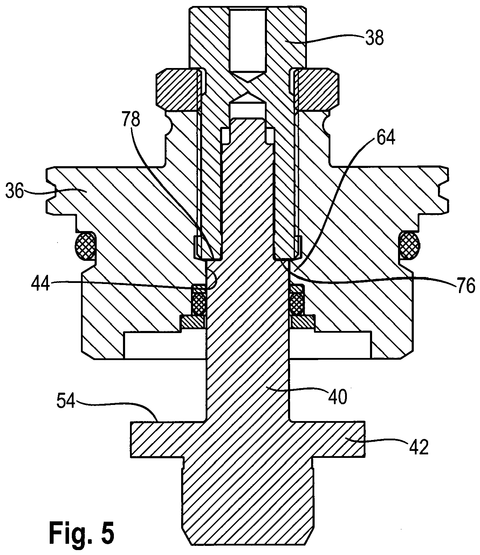

Die Figur 5 stellt die Verstellschraube 38 in einem in das Verschlusselement 36 vollständig eingeschraubten Zustand dar. Die Einschraubtiefe der Verstellschraube 38 wird durch den Führungsabschnitt 64 der Durchgangsbohrung 44 begrenzt, in dem die Verstellschraube 38 an diesem anliegt. Der Spindelschaft 40 wird von der Verstellschraube 38 über die Ringstirnfläche 76 und die Ringfläche 78 axial verschoben, wobei der Federteller 42 mit seiner Ringstirnfläche 54 vom Verschlusselement 36 wegbewegt ist. Wird die Verstellschraube 38 von der in der Figur 5 gezeigten Position wieder aus dem Verschlusselement 36 geschraubt, so wird der Spindelschaft 40 durch die Federkraft der nicht dargestellten Ventilfeder ebenfalls in diese Richtung bewegt.

Ab der in Figur 2 gezeigten Position hebt bei einem weiteren Herausschrauben der Verstellschraube 38 die Ringstirnfläche 76 von der Ringfläche 78 ab, da der Spindelschaft 40 mit seinem Federteller 42 am Verschlusselement 36 anliegt. Die Verstellschraube 38 kann beim erfindungsgemäßen Druckventil 32 in dieser Position des Spindelschafts 40 im Unterschied zum Stand der Technik kein Drehmoment über diesen auf das Verschlusselement 36 übertragen, wodurch keine Gefahr besteht, dass das Verschlusselement 36 Ober den Spindelschaft 40 und den Federteller 42 aus einem (nicht dargestellten) Ventilgehäuse beim Herausschrauben der Verstellschraube 38 herausgeschraubt wird.

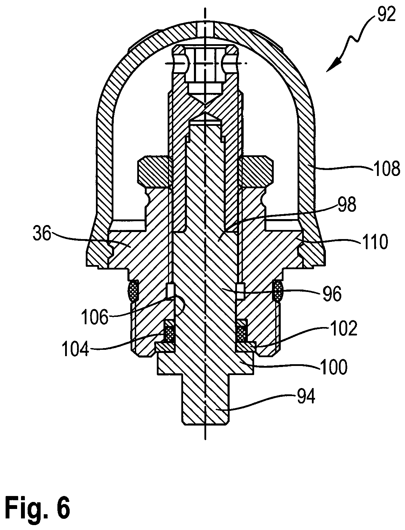

Figur 6 stellt eine zweite Ausführungsform eines erfindungsgemäßen Druckventils 92 dar, wobei der Einfachheit halber nur die Wesentlichen Unterschiede aufgezeigt werden. Ein Führungszapfen 94 hat hierbei einen kleineren Durchmesser als ein Führungsabschnitt 96 eines Spindelschafts 98. Ein Federteller 100 stützt sich in der in Figur 6 gezeigten Position des Spindelschafts 98 an einer Ringsicherung 102 für einen O-Dichtring 104 von Dichtmitteln für eine Durchgangsbohrung 106 des Verschlusselements 36 ab.

An dem Verschlusselement 36 ist in der Figur 6 ein kuppelförmiges Abdeckelement 108 im Wesentlichen formschlüssig an einem Außenbund 110 des Verschlusselements 36 vorgesehen.

Offenbart ist ein Druckventil mit einem Federteller, der über eine Einstellspindel verschiebbar ist. Die Einstellspindel hat hierfür eine Verstellschraube, die axial einen Spindelschaft verschieben kann, an dem der Federteller vorgesehen ist. Die Verstellschraube und der Spindelschaft sind dabei derart ausgestaltet, dass über die Verstellschraube im Wesentlichen kein Drehmoment auf den Spindelschaft übertragbar ist.

### Bezugszeichenliste

- 1: Druckventil
- 2: Ventilgehäuse
- 4: Verschlusselement
- 6: Ventilkörper
- 8: Ventilsitz
- 10: Ventilfeder
- 12: Federteller
- 14: Einstellspindel
- 16: Verschlusselement
- 18: Federraum
- 20: Schaft
- 22: Endabschnitt
- 24: Sprengring
- 26: Werkzeugabschnitt
- 28: Kontermutter
- 30: Abdeckelement
- 32: Druckventil
- 34: Einstellspindel
- 36: Verschlusselement
- 38: Verstellschraube
- 40: Spindelschaft
- 42: Federteller
- 43: Gewinde
- 44: Durchgangsbohrung
- 46: Führungsabschnitt
- 48: Endabschnitt
- 50: Ringstirnfläche
- 52: Führungszapfen
- 54: Schulter
- 56: Anlagefläche
- 58: Aussparung
- 60: Dichtmittel
- 62: Innengewinde
- 64: Führungsabschnitt
- 66: Führungsabschnitt
- 68: Endabschnitt
- 70: Sacklochbohrung
- 72: Führungszapfen
- 74: Außengewindeabschnitt
- 76: Ringstirnfläche
- 78: Ringfläche
- 80: Kontermutter
- 82: Aussparung
- 84: Außenmantelfläche
- 86: Außenbund
- 88: Innenmantelfläche
- 90: Innenbund
- 92: Druckventil
- 94: Führungszapfen
- 96: Führungsabschnitt
- 98: Spindelschafts
- 100: Federteller
- 102: Ringsicherung
- 104: O-Dichtring
- 106: Durchgangsbohrung
- 108: Abdeckelement
- 110: Außenbund

## Patentansprüche

1. Druckventil mit einem Ventilgehäuse (2) in dem ein Federteller (42) angeordnet ist, an dem sich eine einen Ventilkörper (6) mit einer Federkraft beaufschlagende Ventilfeder (10) abstützt, wobei der Federteller (42) über eine Einstellspindel (14) zum Einstellen der Federkraft verschiebbar ist, wobei die Einstellspindel (14) zweigeteilt mit einem mit dem Federteller (42) verbundenen und in einem Verschlusselement (36) des Ventilgehäuses (2) verschiebbar angeordneten Spindelschaft (40) und einer in das Verschlusselement (36) einschraubbaren Verstellschraube (38) ausgebildet ist, wobei die Verstellschraube (38) und der Spindelschaft (40) in ihrer Umfangsrichtung relativ zueinander bewegbar sind und der Spindelschaft (40) zusammen mit dem Federteller (42) über die Verstellschraube (38) in einer Axialrichtung verschiebbar ist, wobei der Spindelschaft (40) dichtend im Verschlusselement (36) geführt ist, wobei der Federteller (42) und der Spindelschaft (40) einstückig ausgebildet sind, wobei der Federteller (42) eine am Verschlusselement (36) anliegbare Schulter (54) zum Begrenzen seines Verschiebewegs in einer Richtung weg vom Ventilkörper (6) aufweist und wobei die Verstellschraube (38) den Spindelschaft (40) zumindest abschnittsweise umgreift.

2. Druckventil nach Anspruch 1, wobei der Spindelschaft (40) einen ersten im Verschlusselement (36) geführten Führungsabschnitt (46) und einen zweiten radial zum Führungsabschnitt (46) zurückgestuften Endabschnitt (68) aufweist, der von der Verstellschraube (38) umgreifbar ist.

3. Druckventil nach Anspruch 2, wobei die Verstellschraube (38) eine axiale Bohrung (70), insbesondere Sacklochbohrung (70), aufweist in die der Endabschnitt (68) des Spindelschafts (40) einführbar ist.

4. Druckventil nach einem der vorhergehenden Ansprüche, wobei die Verstellschraube (38) und der Spindelschaft (40) derart ausgestaltet sind, dass sie sich in Axialrichtung hintergreifen.

5. Druckventil nach Anspruch 4, wobei zum Hintergreifen ein auskragender Vorsprung (90) in der Bohrung (70) der Verstellschraube (38) und ein auskragender Vorsprung (86) am Endabschnitt (68) des Spindelschafts (40) ausgebildet sind.

6. Druckventil nach einem der Ansprüche 2-5, wobei ein Führungszapfen (72) am Endabschnitt (68) des Spindelschafts (40) ausgebildet ist.

7. Druckventil nach einem der vorhergehenden Ansprüche, wobei der Spindelschaft (40) axial über eine Stirnfläche (76) der Verstellschraube (38) verschiebbar ist.

## Claims

1. Pressure valve having a valve housing (2) in which there is arranged a spring plate (42), on which spring plate there is supported a valve spring (10) which exerts a spring force on a valve body (6), wherein the spring plate (42) is displaceable by means of a setting spindle (14) for the purposes of setting the spring force, wherein the setting spindle (14) is formed in two parts, with a spindle shank (40), which is connected to the spring plate (42) and which is arranged displaceably in a closure element (36) of the valve housing (2), and with an adjustment screw (38), which can be screwed into the closure element (36), wherein the adjustment screw (38) and the spindle shank (40) are movable relative to one another in their circumferential direction, and the spindle shank (40) is displaceable together with the spring plate (42) by means of the adjustment screw (38) in an axial direction, wherein the spindle shank (40) is guided sealingly in the closure element (36), wherein the spring plate (42) and the spindle shank (40) are formed in one piece, wherein the spring plate (42) has a shoulder (54) which can be caused to bear against the closure element (36) and which serves for limiting the displacement travel thereof in a direction away from the valve body (6), and wherein the adjustment screw (38) engages around the spindle shank (40) at least in sections.

2. Pressure valve according to Claim 1, wherein the spindle shank (40) has a first guide section (46), which is guided in the closure element (36), and a second end section (68), which is radially set back in relation to the guide section (46) and which can be engaged around by the adjustment screw (38).

3. Pressure valve according to Claim 2, wherein the adjustment screw (38) has an axial bore (70), in particular blind bore (70), into which the end section (68) of the spindle shank (40) can be introduced.

4. Pressure valve according to one of the preceding claims, wherein the adjustment screw (38) and the spindle shank (40) are designed so as to engage behind one another in an axial direction.

5. Pressure valve according to Claim 4, wherein, for the engaging-behind action, a protruding projection (90) is formed in the bore (70) of the adjustment screw (38) and a protruding projection (86) is formed on the end section (68) of the spindle shank (40).

6. Pressure valve according to one of Claims 2-5, wherein a guide peg (72) is formed on the end section (68) of the spindle shank (40).

7. Pressure valve according to one of the preceding claims, wherein the spindle shank (40) is displaceable axially by means of an end surface (76) of the adjustment screw (38).

## Revendications

1. Soupape de pression comprenant un boîtier de soupape (2) dans lequel est disposée une plaque à ressort (42) sur laquelle s'appuie un ressort de soupape (10) sollicitant un corps de soupape (6) avec une force de ressort, la plaque à ressort (42) pouvant être déplacée par une broche de réglage (14) pour régler la force du ressort, la broche de réglage (14) étant conçue en deux parties avec une tige de broche (40), reliée à la plaque à ressort (42) et disposée de manière coulissante dans un élément de fermeture (36) du boîtier de soupape (2) et une vis de réglage (38) pouvant être vissée dans l'élément de fermeture (36), la vis de réglage (38) et la tige de broche (40) pouvant être déplacée dans leur direction circonférentielle l'une par rapport à l'autre et la tige de broche (40) pouvant coulisser dans une direction axiale conjointement avec la plaque à ressort (42) par le biais de la vis de réglage (38), la tige de broche (40) étant guidée de manière étanche dans l'élément de fermeture (36), la plaque à ressort (42) et la tige de broche (40) étant formées d'une seule pièce, la plaque à ressort (42) comportant un épaulement (54) pouvant venir en appui sur l'élément de fermeture (36) pour limiter le coulissement de celle-ci dans une direction opposée au corps de soupape (6) et la vis de réglage (38) s'engageant au moins en partie autour de la tige de broche (40).

2. Soupape de pression selon la revendication 1, la tige de broche (40) comportant une première partie de guidage (46) guidée dans l'élément de fermeture (36) et une deuxième partie d'extrémité (68) radialement en retrait par rapport à la partie de guidage (46) et s'engeant autour de la vis de réglage (38).

3. Soupape de pression selon la revendication 2, la vis de réglage (38) comportant un trou axial (70), en particulier un trou borgne (70), dans lequel la partie d'extrémité (68) de la tige de broche (40) peut être insérée.

4. Soupape de pression selon l'une des revendications précédentes, la vis de réglage (38) et la tige de broche (40) étant conçues de manière à s'engager en arrière dans la direction axiale.

5. Soupape de pression selon la revendication 4, une saillie (90) en console étant formée dans le trou (70) de la vis de réglage (38) et une saillie (86) en console étant formée au niveau de la partie d'extrémité (68) de la tige de broche (40) pour réaliser l'engagement en arrière.

6. Soupape de pression selon l'une des revendications 2 à 5, un téton de guidage (72) étant formé au niveau de la partie d'extrémité (68) de tige de broche (40).

7. Soupape de pression selon l'une des revendications précédentes, la tige de broche (40) pouvant coulisser axialement sur une face d'extrémité (76) de la vis de réglage (38).
